# FASCICULE DE BREVET EUROPEEN

(11) **EP 4 573 258 B1**
(45) Date de publication et mention de la délivrance du brevet: **03.06.2026**
(21) Numéro de dépôt: 23741029.5
(22) Date de dépôt: 10.07.2023
(51) Int. Cl.: E05C 17/60, E05F 5/00, B60J 5/06, E05D 15/10

(54) **DISPOSITIF DE MAINTIEN POUR UNE PORTE COULISSANTE D'UN VÉHICULE AUTOMOBILE**
HALTEVORRICHTUNG FÜR EINE SCHIEBETÜR EINES KRAFTFAHRZEUGS
HOLDING DEVICE FOR A SLIDING DOOR OF A MOTOR VEHICLE

(30) Priorité: 18.08.2022 FR 2208375
(43) Date de publication de la demande: 25.06.2025
(73) Titulaire: Renault s.a.s, 92100 Boulogne Billancourt (FR)
(72) Inventeur: HEWAK, Gregor, 78280 Guyancourt (FR); TANGUY, Jean-Philippe, 91300 Massy (FR)
(86) Numéro de dépôt international: PCT/EP2023/068969
(87) Numéro de publication internationale: WO 2024/037785

(56) Documents cités:
- FR-A1- 2 912 177
- FR-A1- 3 084 617
- US-B1- 8 282 156

## Description

### Domaine Technique de l'invention

L'invention concerne un système de porte coulissante pour un véhicule automobile, le système de porte coulissante comprenant un dispositif de maintien de la porte en position ouverte. L'invention concerne aussi un véhicule automobile comprenant un tel système de porte coulissante.

### Etat de la technique antérieure

Pour accéder à un habitacle ou à un espace de chargement d'un véhicule automobile, on connaît l'utilisation de portes coulissantes. L'intégration de portes coulissantes à un véhicule automobile repose classiquement sur un système de porte coulissante comprenant un rail externe s'étendant longitudinalement sensiblement à mi-hauteur de la caisse du véhicule. Ce rail externe coopère avec des galets solidaires de la porte pour former un dispositif de guidage de la porte entre sa position fermée et sa position ouverte. Ce dispositif de guidage permet notamment de maintenir la porte en position ouverte sans risque d'affaissement ou d'arrachement de cette dernière. Ce dispositif de guidage intègre également une butée définissant la position ouverte de la porte. Les systèmes de porte coulissante connus de l'état de la technique assurent un guidage et un maintien convenable de la porte, toutefois, la présence du rail externe nuit à l'aspect esthétique extérieur du véhicule. Un tel système de porte coulissante est connu de US 8 282 156 B1.

### Présentation de l'invention

Le but de l'invention est de fournir un système de porte coulissante remédiant aux inconvénients ci-dessus et améliorant les systèmes de porte coulissante connus de l'art antérieur.

Plus précisément, un premier objet de l'invention est un système de porte coulissante sans rail externe qui soit à la fois fiable et sûr d'utilisation.

### Résumé de l'invention

L'invention se rapporte à un système de porte coulissante pour un véhicule automobile comprenant un élément de caisse, une porte coulissante entre une position ouverte et une position fermée par rapport à l'élément de caisse, et un dispositif de maintien de la porte lorsqu'elle est en position ouverte,
le dispositif de maintien comprenant :
   - un premier mécanisme comprenant une première partie fixe et une première partie mobile, la première partie fixe étant fixée à l'élément de caisse et la première partie mobile étant articulée par rapport à la première partie fixe entre une position rétractée contre l'élément de caisse et une position déployée, la première partie mobile comprenant une première surface d'emboîtement,
   - un premier moyen d'actionnement du premier mécanisme configuré de sorte que la première partie mobile est en position rétractée lorsque la porte est en position fermée, et de sorte que la première partie mobile est en position déployée lorsque la porte est en position ouverte,
   - un deuxième mécanisme comprenant une deuxième partie fixe et une deuxième partie mobile, la deuxième partie fixe étant fixée à la porte et la deuxième partie mobile étant articulée par rapport à la deuxième partie fixe entre une position rétractée contre la porte et une position déployée, la deuxième partie mobile comprenant une deuxième surface d'emboîtement,
   - un deuxième moyen d'actionnement du deuxième mécanisme configuré de sorte que la deuxième partie mobile est en position rétractée lorsque la porte est en position fermée, et de sorte que la deuxième partie mobile est en position déployée lorsque la porte est en position ouverte,
la première surface d'emboîtement coopérant avec la deuxième surface d'emboîtement lorsque la porte est en position ouverte pour maintenir la porte.

La première partie mobile peut être articulée en rotation autour de la première partie fixe selon un axe de rotation s'entendant sensiblement verticalement. La deuxième partie mobile peut être articulée en rotation autour de la deuxième partie fixe selon un axe de rotation s'entendant sensiblement verticalement.

Le premier mécanisme peut comprendre un premier moyen de rappel tendant à faire passer la première partie mobile de sa position rétractée à sa position déployée, et la première partie mobile peut comprendre un moyen d'appui contre la porte, notamment un galet, le déplacement de la porte de sa position ouverte à sa position fermée exerçant un appui sur ledit moyen d'appui tendant à faire passer la première partie mobile de sa position déployée à sa position rétractée.

Le premier mécanisme peut comprendre un moyen de blocage automatique de la première partie mobile en position déployée, et un moyen de déblocage de la première partie mobile, le moyen de déblocage comprenant levier configuré pour désactiver le moyen de blocage automatique, la porte comprenant une surface d'appui configurée pour actionner ledit levier lorsque la porte passe de sa position ouverte à sa position fermée.

Le système de porte coulissante peut comprendre en outre un dispositif de guidage de la porte entre sa position fermée et sa position ouverte, le dispositif de guidage comprenant un troisième mécanisme configuré pour être actionné par un déplacement de la porte entre sa position fermée et sa position ouverte, le troisième mécanisme étant relié par un câble à la deuxième partie mobile, le troisième mécanisme étant configuré de sorte qu'un déplacement de la porte de sa position fermée à sa position ouverte entraîne une variation de la tension dudit câble, le deuxième mécanisme étant configuré de sorte que la variation de tension du câble fasse passer la deuxième partie mobile de sa position rétractée à sa position déployée.

Le troisième mécanisme peut comprendre:
- une navette en liaison glissière avec la porte et un support d'enroulement du câble fixé selon une liaison pivot à la porte, le support d'enroulement du câble étant fixé à une première extrémité du câble, la navette étant configurée de sorte à entraîner en rotation le support d'enroulement du câble lorsque la porte passe de sa position fermée à sa position ouverte de sorte à exercer une tension sur la première extrémité du câble, ou
- un vérin comprenant un corps solidaire de la porte et un piston mobile relativement au corps, le piston étant fixé à une première extrémité du câble, le piston étant configuré pour être déplacé au sein du corps lorsque la porte passe de sa position fermée à sa position ouverte de sorte à exercer une pression sur la première extrémité du câble.

L'élément de caisse peut comprendre une embrasure dans laquelle la porte prend place lorsqu'elle est en position fermée, le premier mécanisme étant positionné à l'arrière de l'embrasure sensiblement à mi-hauteur de l'embrasure, le deuxième mécanisme étant positionné contre une face intérieure de la porte et à même hauteur que le premier mécanisme, le dispositif de guidage étant positionné au niveau d'un bord inférieur de la porte.

L'élément de caisse peut comprendre une embrasure dans laquelle la porte prend place lorsqu'elle est en position fermée, et le deuxième moyen d'actionnement peut être configuré de sorte que la deuxième partie mobile se déplace de sa position rétractée à sa position déployée seulement après que le deuxième mécanisme ait franchit ladite embrasure lorsque la porte se déplace de sa position fermée à sa position ouverte.

La porte peut être mobile de sa position fermée à sa position ouverte selon un mouvement comprenant une première phase suivi d'une deuxième phase, la première phase du mouvement comprenant un déplacement transversal de la porte relativement à l'élément de caisse, et la deuxième phase du mouvement comprenant une translation longitudinale de la porte relativement à l'élément de caisse,
le premier moyen d'actionnement étant configuré de sorte que la première partie mobile passe de sa position rétractée à sa position déployée au cours de la première phase de déplacement de la porte, et/ou
le deuxième moyen d'actionnement étant configuré de sorte que la deuxième partie mobile passe de sa position rétractée à sa position déployée au cours de la deuxième phase de déplacement de la porte.

La première surface d'emboîtement et la deuxième surface d'emboîtement peuvent former respectivement une partie mâle et une partie femelle emboîtée l'une dans l'autre lorsque la porte est en position ouverte.

L'invention se rapporte également à un véhicule automobile, comprenant un système de porte coulissante tel que défini précédemment.

### Présentation des figures

Ces objets, caractéristiques et avantages de la présente invention seront exposés en détail dans la description suivante de deux modes de réalisation particuliers faits à titre non-limitatif en relation avec les figures jointes parmi lesquelles :
La figure 1 est une vue schématique de côté d'un véhicule automobile équipé d'un système de porte coulissante selon un mode de réalisation de l'invention, une porte du véhicule étant en position fermée.
La figure 2 est une vue schématique de côté du véhicule, la porte étant en position ouverte.
La figure 3 est une vue dans un plan transversal et vertical du système de porte coulissante, la porte étant en position ouverte.
La figure 4 est une vue en perspective d'une face intérieure de la porte du véhicule, d'un dispositif de guidage et d'un dispositif de maintien du système de porte coulissante, la porte étant en position fermée.
La figure 5 est une vue du même ensemble que celui de la figure 4, la porte étant dans une première position intermédiaire entre sa position fermée et sa position ouverte.
La figure 6 est une vue du même ensemble que celui des figures 4 et 5, la porte étant dans une deuxième position intermédiaire entre sa position fermée et sa position ouverte, la porte étant plus proche de la position ouverte que sur la figure 5.
La figure 7 une vue en perspective du dispositif de guidage et du dispositif de maintien, la porte étant dans une troisième position intermédiaire entre sa position fermée et sa position ouverte.
La figure 8 une vue en perspective du dispositif de guidage et du dispositif de maintien, la porte étant dans sa position ouverte.
La figure 9 est une vue en perspective d'un premier mécanisme du dispositif de maintien.
La figure 10 est une vue de profil du premier mécanisme, la porte étant en position fermée.
La figure 11 est une vue de profil du premier mécanisme, la porte étant en position ouverte.
La figure 12 est une vue de profil du deuxième mécanisme, la porte étant en position fermée.
La figure 13 une vue de profil du deuxième mécanisme, la porte étant dans une quatrième position intermédiaire entre sa position fermée et sa position ouverte.
La figure 14 est une vue de profil du deuxième mécanisme, la porte étant en position ouverte.
La figure 15 est une vue de profil du troisième mécanisme.
La figure 16 est une vue de dessus du dispositif de guidage et du dispositif de maintien, la porte étant dans une cinquième position intermédiaire entre sa position fermée et sa position ouverte.
La figure 17 est une vue de dessus du dispositif de guidage et du dispositif de maintien, la porte étant dans une sixième position intermédiaire entre sa position fermée et sa position ouverte.
La figure 18 est une vue du dispositif de guidage et du dispositif de maintien selon un deuxième mode de réalisation de l'invention.
La figure 19 est une vue en coupe de côté d'un deuxième mécanisme du dispositif de maintien selon le deuxième mode de réalisation de l'invention, la porte étant en position ouverte.

### Description détaillée

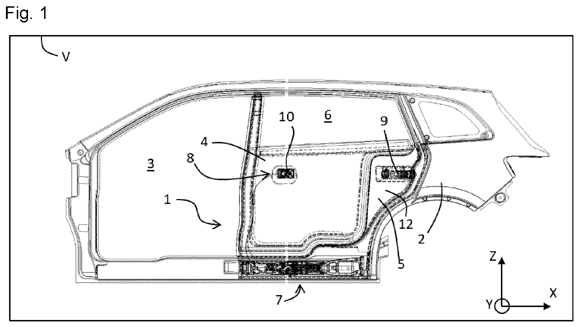

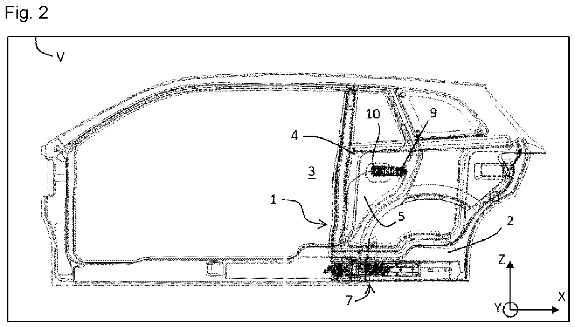

Les figures 1 et 2 illustrent schématiquement un véhicule V automobile comprenant un système de porte coulissante 1 selon un mode de réalisation de l'invention. Le véhicule V peut notamment être un véhicule particulier, un véhicule utilitaire, un camion ou même un bus. Il comprend une caisse formant une structure rigide du véhicule, et définissant un volume intérieur du véhicule. Ce volume intérieur peut être par exemple un habitacle ou un espace de chargement du véhicule. Le système de porte coulissante 1 comprend au moins un élément de caisse 2 pourvu d'une ouverture, ou embrasure 3, et une porte 4 coulissante réversiblement par rapport à l'élément de caisse 2 entre une position ouverte et une position fermée. Sur la figure 1, la porte 4 est représentée en position fermée. Sur la figure 2, la porte 4 est représentée en position ouverte.

Dans ce document, l'axe X désigne l'axe longitudinal du véhicule V. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. On considère que le véhicule repose sur un sol horizontal. L'axe Z est un axe vertical, orienté de bas en haut. Les axes X, Y et Z forment un repère orthogonal.

Les adjectifs d'énumération ("premier", "deuxième", etc...) figurant dans ce document ne caractérisent aucune relation d'ordre entre les différents objets auxquels ils se rapportent. Ils visent simplement à distinguer et à identifier ces différents objets.

La porte 4 est une porte latérale du véhicule, notamment une porte latérale arrière. Elle se déplace globalement de l'avant vers l'arrière depuis sa position fermée vers sa position ouverte. En position fermée, la porte 4 prend place dans l'embrasure 3 et la recouvre. En remarque, on note sur la figure 1 que l'embrasure 3 s'étend aussi à l'avant de la porte 4 lorsque celle-ci est en position fermée. Cette partie avant de l'embrasure est destinée à être recouverte par une porte avant du véhicule. Le véhicule V peut éventuellement comprendre un pied central s'étendant verticalement au milieu de l'embrasure délimitant deux ouvertures distinctes.

Par ailleurs, en position fermée, une partie arrière de la porte 4 recouvre aussi une portion 5 de l'élément de caisse 2. La portion 5 de l'élément de caisse recouverte par la porte 4 en position fermée se situe sensiblement au-dessus d'un passage de roue arrière du véhicule. La porte 4 comprend, dans sa moitié supérieure, une vitre 6 qui s'étend au-dessus de la portion 5 de l'élément de caisse. En position ouverte, un bord avant de la porte se situe sensiblement au niveau du bord arrière de l'embrasure 3, ou légèrement à l'avant du bord arrière de l'embrasure 3, notamment au niveau d'un bord avant de la portion 5 de l'élément de caisse 2.

Le système de porte coulissante 1 comprend un dispositif de guidage 7 du déplacement de la porte entre sa position fermée et sa position ouverte. Le dispositif de guidage 7 est positionné sensiblement au niveau d'un bord inférieur de la porte 4. Le dispositif de guidage 7 est apte à supporter le poids de la porte 4 et à guider son déplacement entre sa position fermée et sa position ouverte. Ce dispositif de guidage 7, qui sera décrit plus en détail par la suite, peut comprendre un moyen d'ouverture et de fermeture automatique de la porte, comme par exemple un moteur électrique.

La porte 4 est mobile de sa position fermée à sa position ouverte selon un mouvement comprenant une première phase suivi d'une deuxième phase. La première phase du mouvement peut comprendre un déplacement transversal de la porte 4 relativement à l'élément de caisse 2. Lors de cette première phase du mouvement, la porte peut être inclinée par rapport à son orientation en position fermée par un premier mouvement de rotation autour d'un axe vertical. Le premier mouvement de rotation est suivi d'un deuxième mouvement de rotation autour d'un axe vertical, dans un sens opposé au premier mouvement de rotation, de sorte à rétablir une orientation sensiblement parallèle à l'axe longitudinal. A l'issue de la première phase de déplacement, la porte 4 est décalée par rapport à l'embrasure 3. La deuxième phase du mouvement peut comprendre une translation longitudinale de la porte vers l'arrière relativement à l'élément de caisse. L'orientation de la porte en positon ouverte et en position fermée peut être sensiblement identique et parallèle à l'axe longitudinal. La fermeture de la porte est obtenue en suivant, en sens inverse, une trajectoire identique à la trajectoire d'ouverture de la porte.

Le système de porte coulissante 1 comprend également un dispositif de maintien 8 de la porte lorsqu'elle est en position ouverte. Le dispositif de maintien 8 est configuré pour maintenir la porte 4 lorsqu'elle est en position ouverte. Le dispositif de maintien 8 peut aussi participer au maintien de la porte à quelques centimètres de sa position ouverte, position qui est qualifiée par la suite de position quasi-ouverte. En revanche, le dispositif de maintien 8 n'est pas configuré pour maintenir la porte dans sa position fermée ou au cours de son déplacement entre sa position fermée et sa position ouverte ou quasi-ouverte. Le dispositif de maintien 8 comprend principalement un premier mécanisme 9 et un deuxième mécanisme 10. Le premier mécanisme 9 est solidaire de l'élément de caisse 2 et le deuxième mécanisme est solidaire de la porte 4. Plus précisément, le premier mécanisme 9 est positionné à l'arrière de l'embrasure 3, sensiblement à mi-hauteur de l'embrasure 3. Le deuxième mécanisme 10 est positionné contre une face intérieure de la porte et à même hauteur que le premier mécanisme 9. Le deuxième mécanisme 10 est notamment positionné sous la vitre 6 de la porte 4. Comme nous allons le voir par la suite, ces deux mécanismes 9, 10 sont configurés pour se déployer au cours de l'ouverture de la porte 4 et pour coopérer ensemble lorsque la porte est en position ouverte ou quasi-ouverte de manière à la maintenir. La coopération de ces deux mécanismes permet un maintien robuste de la porte en position ouverte, en complément du maintien fourni par le dispositif de guidage 7.

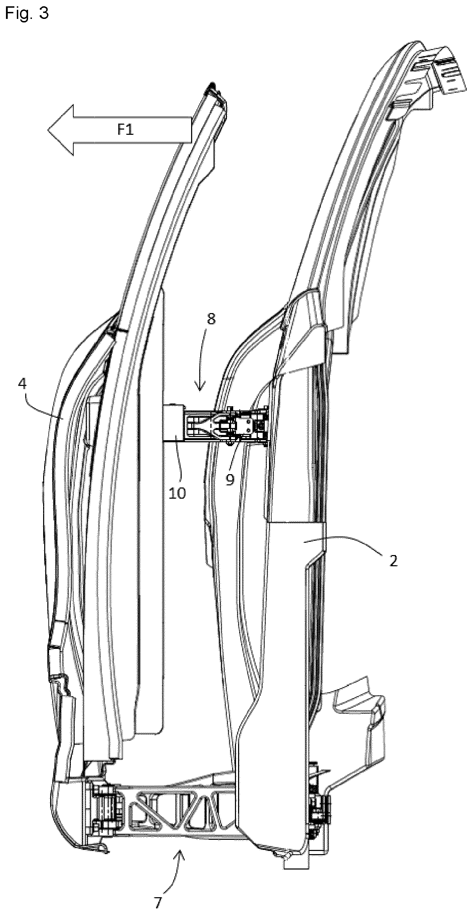

La figure 3 illustre le système de porte coulissante 1 selon une vue dans un axe perpendiculaire à l'axe longitudinal, la porte 4 étant en position ouverte. Le dispositif de maintien 8 forme une butée longitudinale de la porte en position ouverte. Il forme également un moyen de retenue transversale de la porte relativement à l'élément de caisse. Le dispositif de maintien 8 permet ainsi d'éviter tout arrachement de la porte consécutivement à un effort transversal (représenté par la flèche F1 sur la figure 3) exercé sur le haut de la porte lorsqu'elle est en position ouverte. En effet, le dispositif de guidage 7 étant positionné au niveau d'un bord inférieur de la porte, ce dispositif de guidage pourrait être endommagé consécutivement à un effort transversal exercé sur le haut de la porte. De préférence, la distance séparant le dispositif de guidage 7 du dispositif de maintien 8 selon l'axe vertical peut être supérieure ou égale à 50 cm, voire supérieure ou égale à 70 cm.

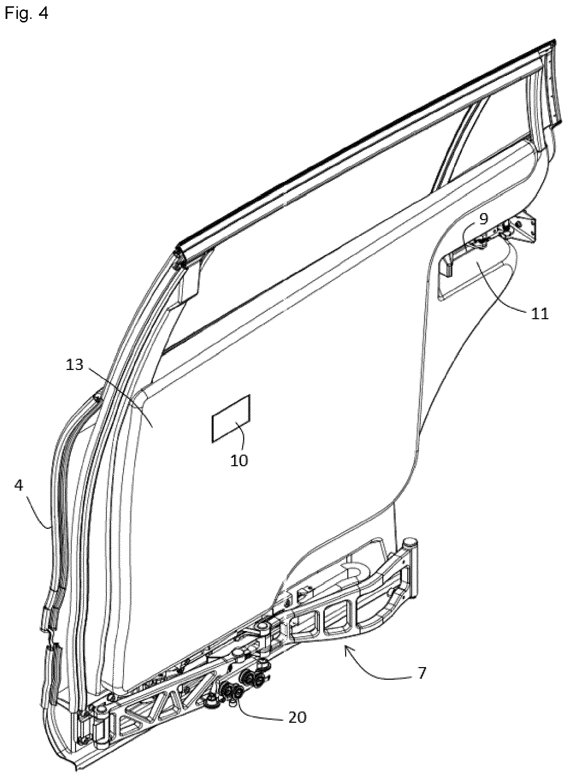

La figure 4 illustre la porte 4 en position fermée, ainsi que le dispositif de guidage 7 et les deux mécanismes 9 et 10. Lorsque la porte est en position fermée, le premier mécanisme 9 adopte une position rétractée à l'intérieur d'un logement 11 formé dans la porte. Le logement 11 est agencé au niveau d'un bord arrière de la porte et possède une forme qui épouse sensiblement la forme du premier mécanisme 9. Le logement 11 est formé dans une partie 12 de la porte 4 qui recouvre la portion 5 de l'élément de caisse. Le premier mécanisme est ainsi rendu inaccessible lorsque la porte est en position fermée. Le deuxième mécanisme 10 adopte également une position rétractée lorsque la porte est en positon fermée. Le deuxième mécanisme est alors escamoté à l'intérieur d'une garniture d'habillage 13 de la porte. En position rétractée, le deuxième mécanisme 10 est disposé à affleurement de la garniture d'habillage 13 de sorte qu'il est ainsi confondu avec la garniture dans laquelle il s'intègre, ce qui préserve l'esthétique de l'intérieur du véhicule. Le deuxième mécanisme 10 est ainsi également inaccessible à tout passager du véhicule, ce qui évite les risques de pincement.

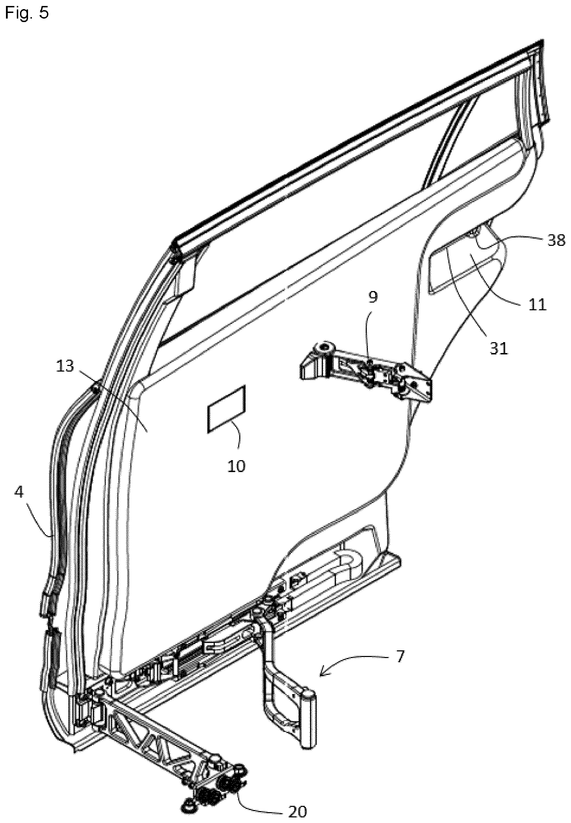

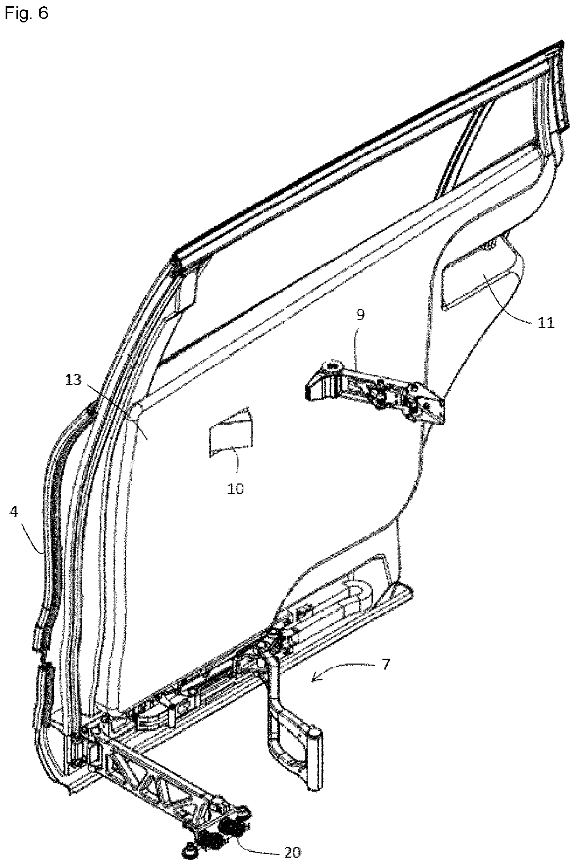

Comme cela sera aussi expliqué plus en détail par la suite, le dispositif de maintien 8 comprend aussi un premier moyen d'actionnement 14 du premier mécanisme 9 et un deuxième moyen d'actionnement 15 du deuxième mécanisme 10. Les moyens d'actionnement 14, 15 sont configurés de sorte que le premier mécanisme et le deuxième mécanisme se déploient au cours de l'ouverture de la porte. La position déployée du premier mécanisme est illustrée sur la figure 5 et sur la figure 6. La position déployée du deuxième mécanisme est illustrée sur la figure 6. Les moyens d'actionnement 14 et 15 sont configurés de sorte à ce que le premier mécanisme se déploie avant le deuxième mécanisme au cours de l'ouverture de la porte.

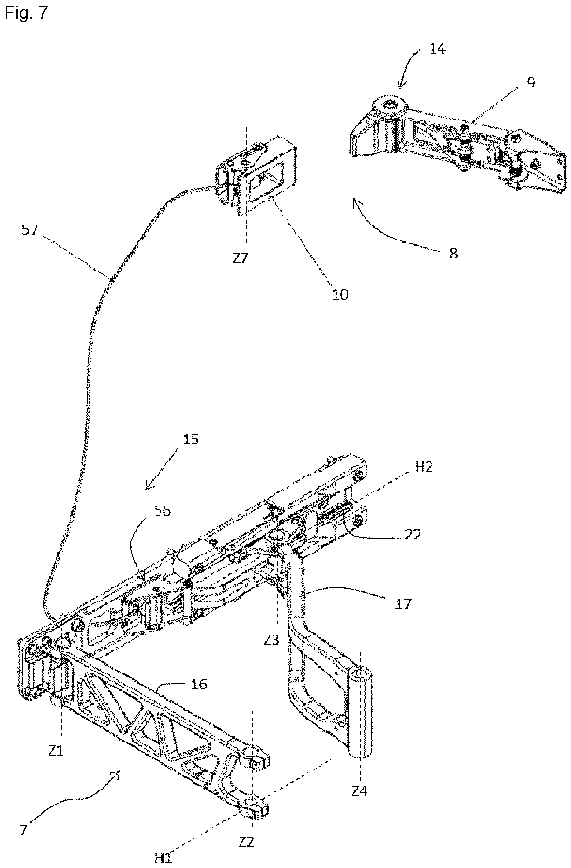

La figure 7 illustre plus en détail le dispositif de guidage 7 et le dispositif de maintien 8. Le dispositif de guidage 7 comprend un mécanisme comprenant deux bras articulés 16, 17, ou pantographe, apte à supporter le poids de la porte 4 lors de son déplacement entre sa position fermée et sa position ouverte. Un premier bras 16 comprend une première extrémité fixée à la porte par un premier moyen de liaison pivot selon un premier axe vertical Z1. Le premier bras 16 comprend une deuxième extrémité fixée à l'élément de caisse par un premier moyen de liaison pivot glissant. Le premier moyen de liaison pivot glissant comprend une liaison pivot selon un deuxième axe vertical Z2 et une liaison glissière selon un premier axe longitudinal X1. Cette liaison glissière peut être obtenue par un ensemble de galets 20 (visibles sur les figures 4 à 6) coopérant avec un rail solidaire de l'élément de caisse. Un deuxième bras 17 comprend une première extrémité fixée à la porte par un deuxième moyen de liaison pivot glissant. Le deuxième moyen de liaison pivot glissant comprend une liaison pivot selon un troisième axe de rotation Z3 et une liaison glissière selon un deuxième axe longitudinal X2. Cette liaison glissière peut également être obtenue par un ensemble de galets coopérant avec un rail 22 s'étendant longitudinalement au niveau du bord inférieur de la porte de la porte. Le deuxième bras 17 comprend une deuxième extrémité fixée à l'élément de caisse par un deuxième moyen de liaison pivot selon un quatrième axe vertical Z4.

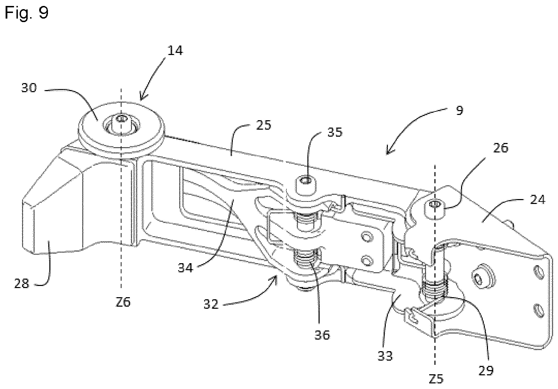

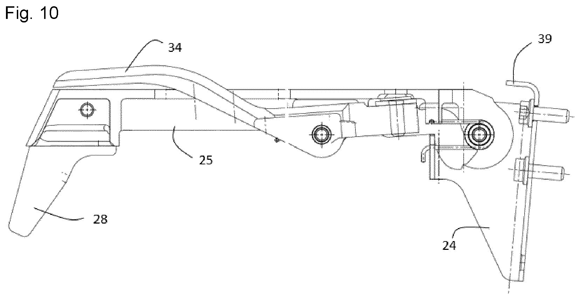

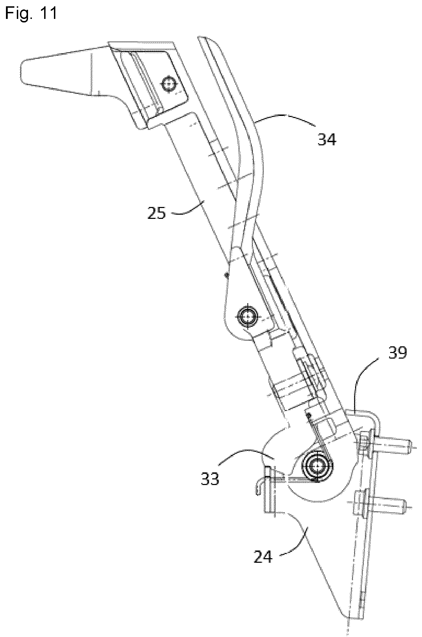

Le premier mécanisme 9 est illustré plus en détail sur les figures 9 à 11. Il comprend une première partie fixe 24 et une première partie mobile 25. La première partie fixe 24 est fixée à l'élément de caisse 2. La première partie mobile 25 est articulée par rapport à la première partie fixe 24 entre une position rétractée contre l'élément de caisse (illustrée sur la figure 10), et une position déployée (illustrée sur la figure 11), dans laquelle elle est saillante depuis l'élément de caisse. En particulier, la première partie mobile est articulée en rotation autour de la première partie fixe selon un cinquième axe de rotation Z5 s'entendant sensiblement verticalement. L'amplitude de rotation de la première partie mobile 25 entre sa position rétractée et sa position déployée peut être, par exemple, comprise entre 45° et 90°. Le premier mécanisme 9 comprend aussi un moyen de butée 39 définissant la position déployée de la première partie mobile 25. Ce moyen de butée 39 peut être formé par une languette solidaire de la première partie fixe 24 et apte à prendre appui contre la première partie mobile 25. Selon une variante de réalisation, la première partie mobile 25 pourrait être liée à la première partie fixe 24 selon un autre type de liaison cinématique, par exemple une liaison glissière.

La première partie fixe 24 comprend un support, par exemple en tôle pliée, qui est visée à l'élément de caisse. Le support supporte un axe 26 auquel la première partie mobile est fixée en liaison pivot. La première partie mobile 25, ou perche mobile 25, possède une forme allongée et est pourvue d'ouvertures à l'une de ses extrémités pour le passage de l'axe 26. L'autre extrémité de la première partie mobile 25 comprend une première surface d'emboîtement 28 destinée à coopérer avec le deuxième mécanisme 10. La première surface d'emboîtement 28 peut par exemple comprendre une forme en tronc de pyramide. En variante, elle pourrait comprendre toute autre forme comme par exemple une forme tronconique ou une forme de tronc de tétraèdre. La surface d'emboîtement peut être prévue par exemple en acier ou en aluminium, ou en variante dans un matériau apte à absorber des chocs tel que du plastique ou du caoutchouc. De préférence la première surface d'emboîtement comprend une forme pointue (c'est-à-dire une forme dont la section est décroissante lorsqu'on se rapproche de son extrémité), de manière à faciliter sa coopération avec le deuxième mécanisme 10. La première surface d'emboîtement 28 peut être saillante dans la direction longitudinale lorsque la première partie fixe 25 est en position déployée.

Le premier moyen d'actionnement 14 est configuré de sorte que la première partie mobile 25 est en position rétractée lorsque la porte est en position fermée, et de sorte que la première partie mobile 25 est en position déployée lorsque la porte est en position ouverte. En l'espèce, d'une part le premier moyen d'actionnement 14 est formé par un premier moyen de rappel 29 tendant à faire passer la première partie mobile 25 de sa position rétractée à sa position déployée. Le premier moyen de rappel 29 peut être formé par un ressort de torsion comprenant une extrémité en appui sur la première partie fixe 24 et l'autre extrémité en appui sur la première partie mobile 25. En l'absence d'une contrainte exercée par la porte sur la première partie mobile 25, cette dernière se déploie automatique sous l'effet du moyen de rappel. L'intégration du premier moyen de rappel 29 permet également un maintien sans jeu de la première partie mobile.

D'autre part, le premier moyen d'actionnement 14 est formé par un appui direct ou indirect de la porte contre une surface d'appui de la première partie mobile 25. Lorsque la porte passe de sa position ouverte, voire sa position décalée en transversal par rapport à l'embrasure 3, à sa position fermée, elle appuie contre ladite surface d'appui, ce qui déplace la première partie mobile vers sa position rétractée. En l'espèce, le premier mécanisme 9 comprend un galet 30 monté libre en rotation autour d'un sixième axe vertical Z6, au niveau de l'extrémité de la première partie mobile 25 opposée à l'axe 26. La porte comprend un chemin de roulement 31 sur lequel le galet 30 peut rouler. Le contact entre le galet 30 et le chemin de roulement 31 est forcé par l'action du premier moyen de rappel 29. La forme du chemin de roulement 31 est conçue pour obtenir un déploiement progressif de la première partie mobile lors de l'ouverture de la porte, notamment lors de la première phase d'ouverture de la porte. Lors de la deuxième phase d'ouverture de la porte, le galet 30 peut être sans contact avec la porte. Le déplacement de la porte de sa position ouverte à sa position fermée conduit la porte à exercer un appui sur le galet 30 qui tend à faire passer la première partie mobile 25 de sa position déployée à sa position rétractée et à recharger le premier moyen de rappel 29.

Le premier mécanisme 9 comprend aussi un moyen de blocage automatique 32 de la première partie mobile 25 en position déployée. Le moyen de blocage automatique 32 peut être formé au moyen d'un élément de blocage 33 prenant appui automatiquement sur la première partie fixe 24 lorsque la première partie mobile 25 atteint sa position déployée. Cet élément de blocage 33 est solidaire d'un levier 34, notamment vissé au levier 34. Le levier 34 est articulé en rotation par rapport à la première partie mobile 25 autour d'un axe 35, parallèle à l'axe 26. Un deuxième ressort de torsion 36 est configuré pour donner à l'élément de blocage 33 une orientation lui permettant de se bloquer sur la première partie fixe 24. Le moyen de blocage automatique 32 permet d'empêcher un mouvement de retour de la première partie mobile 25 vers sa position rétractée. Le moyen de blocage automatique 32 permet ainsi de sécuriser le fonctionnement du dispositif de maintien 7. Il permet aussi d'éviter un phénomène de rebond de la première partie mobile 25 lorsque celle-ci atteint sa position déployée.

Le premier mécanisme 9 comprend également un moyen de déblocage configuré pour désactiver le moyen de blocage automatique 32 lorsque la porte passe de sa position ouverte à sa position fermée. En pratique la porte comprend une surface d'appui 38 configurée pour exercer un appui sur le levier 34 lorsque la porte passe de sa position ouverte à sa position fermée. L'appui de la surface d'appui 38 sur le levier 34 conduit ce dernier à pivoter autour de l'axe 35 dans un sens permettant de désengager l'élément de blocage 33 de la première partie fixe 24. La surface d'appui 38 peut être agencée dans le prolongement du chemin de roulement 31.

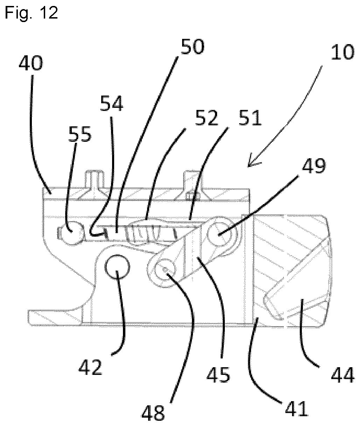

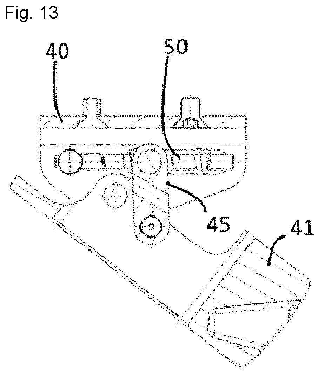

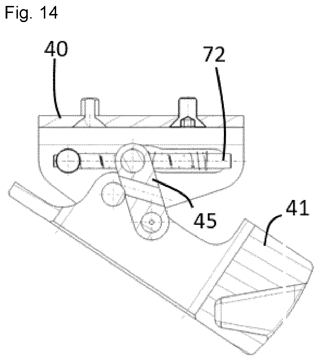

Le deuxième mécanisme 10 est illustré plus en détail sur les figures 12 à 14. Il comprend une deuxième partie fixe 40 et une deuxième partie mobile 41. La deuxième partie fixe 40 est fixée à la porte 4. La deuxième partie mobile 41 est articulée par rapport à la deuxième partie fixe 40 entre une position rétractée contre la porte (illustrée sur la figure 12), et une position déployée (illustrée sur les figures 13 et 14), dans laquelle elle est saillante depuis la porte. En particulier, la deuxième partie mobile 41 est articulée en rotation autour de la deuxième partie fixe 40 selon un septième axe de rotation Z7 s'entendant sensiblement verticalement. L'amplitude de rotation de la deuxième partie mobile 41 entre sa position rétractée et sa position déployée peut être par exemple compris entre 0° et 90°, notamment entre 20° et 60°. Selon une variante de réalisation, la deuxième partie mobile 41 pourrait être liée à la deuxième partie fixe 40 selon un autre type de liaison cinématique, par exemple une liaison glissière.

La deuxième partie fixe 40 comprend un support, par exemple en tôle pliée, qui est vissé à la porte. Le support supporte un axe 42 auquel la deuxième partie mobile 41 est fixée en liaison pivot. La deuxième partie mobile 41, ou réceptacle mobile 41, comprend des ouvertures au travers desquelles l'axe 42 est agencé. La deuxième partie mobile peut comprendre une face destinée à s'étendre parallèlement à la garniture d'habillage 13 de la porte lorsque la deuxième partie mobile est en positon rétractée. Cette face peut éventuellement comprendre un revêtement similaire à celui de la garniture d'habillage, de préférence formant une surface lisse, pour une intégration discrète du deuxième mécanisme dans la porte.

La deuxième partie mobile 41 comprend en outre une deuxième surface d'emboîtement 44 destinée à coopérer avec la première surface d'emboîtement 28. La deuxième surface d'emboîtement 44 peut par exemple comprendre une ouverture borgne épousant la forme de la première surface d'emboîtement 28. La première surface d'emboîtement 28 forme donc une partie mâle et la deuxième surface d'emboîtement 44 forme une partie femelle. En variante, cet agencement pourrait être inversé: la deuxième surface d'emboîtement formant une partie mâle et la première surface d'emboîtement formant une partie femelle. Selon une autre variante, les deux surfaces d'emboitement 28, 44 pourraient comprendre toutes formes permettant leur emboîtement mutuel. Avantageusement la forme pointue de la première surface d'emboîtement 28 permet un centrage automatique des parties mobiles 25 et 41 lorsqu'elles rentrent en contact l'une contre l'autre. Lorsque les deux surfaces d'emboîtement 28, 44 sont en contact l'une contre l'autre, on obtient un blocage en rotation entre la première partie mobile et la deuxième partie mobile selon tout axe. On obtient également un blocage translation entre la première partie mobile et la deuxième partie mobile selon l'axe vertical et selon l'axe transversal. En outre, on obtient également une butée longitudinale définissant la position ouverte de la porte. On obtient donc un maintien de la porte 4 relativement à la caisse dans plusieurs directions. En variante, les formes des surfaces d'emboîtement 28 et 44 pourrait être adaptée de manière à ne réaliser un maintien de la porte que dans une partie de ces directions.

La deuxième partie fixe 40 et la deuxième partie mobile 41 sont non seulement liées l'une à l'autre par l'intermédiaire de l'axe 42 mais également par l'intermédiaire d'un élément de commande 45. L'élément de commande 45 comprend deux ouvertures chacune traversée respectivement par un axe 48, 49. L'élément de commande 45 est monté en liaison pivot avec la deuxième partie mobile 41 via l'axe 48 et il est monté en liaison pivot glissant avec la deuxième partie fixe 40 via l'axe 49. A cet effet, l'axe 49 est monté coulissant dans deux lumières 50 oblongues, agencées sur la deuxième partie fixe 40. Les lumières 50 comprennent une partie rectiligne 51 et une partie sensiblement en forme d'arc de cercle 52 centré sur l'axe 48. Lorsque l'axe 49 coulisse au sein des lumières 50 au niveau de leur partie rectiligne 51 (c'est-à-dire entre les positions de la figure 12 et de la figure 13), il induit un pivotement de la deuxième partie mobile 41 relativement à la deuxième partie fixe 40 qui passe de sa position rétractée à sa position déployée. Lorsque l'axe 49 coulisse au sein des lumières 50 au niveau de leur partie en forme d'arc de cercle 52 (c'est-à-dire entre les positions de la figure 13 et de la figure 14), il n'induit aucun pivotement de la deuxième partie mobile 41 relativement à la deuxième partie fixe 40. Ceci stabilise la position déployée de la deuxième partie mobile 41 et facilite l'accostage entre la première partie mobile 25 et la deuxième partie mobile 41 lors de l'ouverture de la porte.

En outre, le deuxième mécanisme 10 comprend un deuxième moyen de rappel tendant à faire passer la deuxième partie mobile de sa position déployée à sa position rétractée. En l'espèce ce moyen de rappel est formé par un ensemble de deux ressorts 54 comprenant une première extrémité en appui sur un axe fixe 55 solidaire du support, et une deuxième extrémité en appui sur l'axe 49. Les deux ressorts 54 tendent à repousser l'axe 49 vers l'extrémité des lumières 50 correspondant à la position rétractée de la deuxième partie mobile 41. Chaque ressort peut être équipé d'un élément de guidage 72 agencé à l'intérieur du ressort.

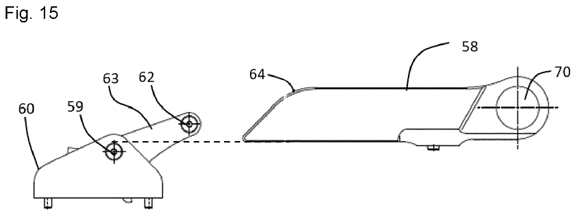

Le deuxième moyen d'actionnement 15 est configuré de sorte que la deuxième partie mobile 41 est en position rétractée lorsque la porte est en position fermée, et de sorte que la deuxième partie mobile 41 est en position déployée lorsque la porte est en position ouverte. En l'espèce, le deuxième moyen d'actionnement 15 comprend un troisième mécanisme 56 intégré au dispositif de guidage 7 et relié par un câble 57 à la deuxième partie mobile 41. Ce troisième mécanisme est notamment illustré sur la figure 15. Le troisième mécanisme 56 est configuré pour être actionné par un déplacement de la porte entre sa position ouverte et sa position fermée.

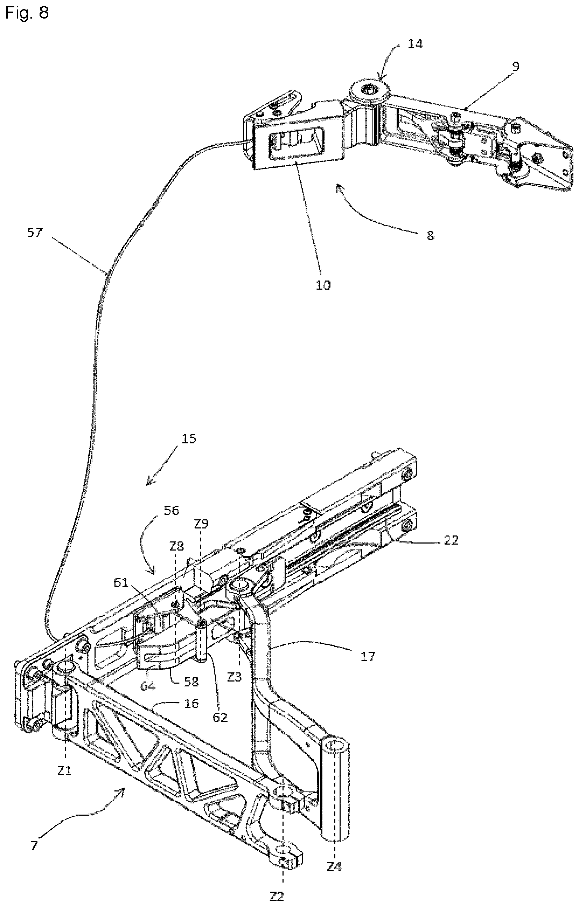

Plus précisément, le troisième mécanisme 56 comprend une navette 58 coopérant avec un support d'enroulement du câble 61. La navette 58 est fixée à la première extrémité du deuxième bras 17 et est ainsi en liaison glissière avec la porte. Plus précisément, la navette 58 comprend une ouverture 70 s'étendant le long de l'axe vertical Z3 et au travers de laquelle passe un montant du deuxième bras 17. La navette 58 se déplace donc relativement à la porte lorsque la porte se déplace en translation relativement à l'élément de caisse, c'est-à-dire lors de la deuxième phase de déplacement de la porte. Le support d'enroulement du câble 61 est fixé selon une liaison pivot à la porte. A cet effet, le troisième mécanisme comprend un support 60 fixé à la porte, et comprenant un axe 59. Le support d'enroulement du câble 61 est monté en liaison pivot relativement au support 60 autour d'un huitième axe vertical Z8. Un rouleau 62 est fixé au support d'enroulement du câble par l'intermédiaire de deux brides 63. Le rouleau est fixé aux deux brides 63 selon une liaison pivot autour d'un neuvième axe vertical Z9. Le rouleau 62 coopère avec une surface supérieure 64 de la navette pour faire pivoter le support d'enroulement du câble 61 autour de l'axe 59. La surface supérieure 64 comprend une rampe apte à exercer un effort sur le rouleau 62 pour faire pivoter les deux brides 63 et le support d'enroulement du câble 61. La rampe est prolongée par une portion plane s'étant horizontalement. Le glissement de la portion plane contre le rouleau 62 n'induit aucune rotation du support d'enroulement du câble 61. La navette est donc destinée à passer entre l'axe 59 et le rouleau 62 lors de l'ouverture de la porte, comme cela est notamment bien visible sur la figure 8. La navette 58 agit donc comme une came pour faire pivoter le support d'enroulement du câble 61 autour de l'axe 59. Une première extrémité du câble 57 est fixée au support d'enroulement du câble 61, si bien que la rotation du support d'enroulement du câble 61 entraîne la mise en tension du câble. L'autre extrémité du câble 57 est fixée à l'axe 49 du deuxième mécanisme. Plus précisément, l'autre extrémité du câble est fixée à l'axe 49 par l'intermédiaire d'un embout vissé dans l'axe 49. Le vissage ou le dévissage partiel de l'embout permet de régler la tension du câble 57.

L'ouverture de la porte provoque un appui de la surface supérieure 64 de la navette 58 sur le rouleau 62. Cet appui entraîne une rotation du support d'enroulement du câble 61, qui met le câble 57 sous tension. La tension du câble exerce un effort de traction sur l'axe 49 à l'encontre des deux ressorts 54, ce qui provoque le déploiement de la deuxième partie mobile 41. Par conséquent, le choix de la forme de la surface supérieure 64 de la navette permet d'adapter la cinématique d'ouverture de la deuxième partie mobile 41.

Le deuxième moyen d'actionnement 15 est configuré de sorte que la deuxième partie mobile 41 se déplace de sa position rétractée à sa position déployée seulement après que le deuxième mécanisme 10 ait franchit l'embrasure 3 lorsque la porte se déplace de sa position fermée à sa position ouverte. Autrement dit, la deuxième partie mobile 41 se déploie seulement à partir du moment où elle est située à l'arrière d'un bord arrière de l'embrasure 3. Ainsi, on évite tout risque de coincement des doigts d'un utilisateur dans le deuxième mécanisme 10 puisque la deuxième partie mobile reste en position rétractée tans qu'elle elle accessible dans l'habitacle ou dans l'espace de chargement. Ceci peut être facilement obtenu en adaptant la position de la navette et/ou du support 60 sur lequel le support d'enroulement du câble 61 et le rouleau 62 sont fixés, ou encore en adaptant la forme de la surface supérieure 64 de la navette 58.

Au cours de la première phase de déplacement de la porte, le premier moyen d'actionnement 14 est configuré de sorte que la première partie mobile 25 passe de sa position rétractée à sa position déployée. Le déplacement transversal de la porte 4 relativement à l'élément de caisse 2 permet à la première partie mobile 25 de se déployer, sous l'action du premier moyen de rappel 29. Selon une variante de réalisation non représentée, le déploiement de la première partie mobile pourrait aussi être commandé par un l'intermédiaire d'un câble reliant la première partie mobile 25 au dispositif de guidage 8. Toutefois, l'utilisation du simple moyen de rappel 29 et du galet 30 permet de synchroniser le déploiement et la rétractation de la première partie mobile de manière simple et efficace. Lors de cette première phase de déplacement, la navette 58 reste éloignée du rouleau 62. Il n'y a pas de variation de tension du câble 57 et le deuxième mécanisme ne se déploie pas.

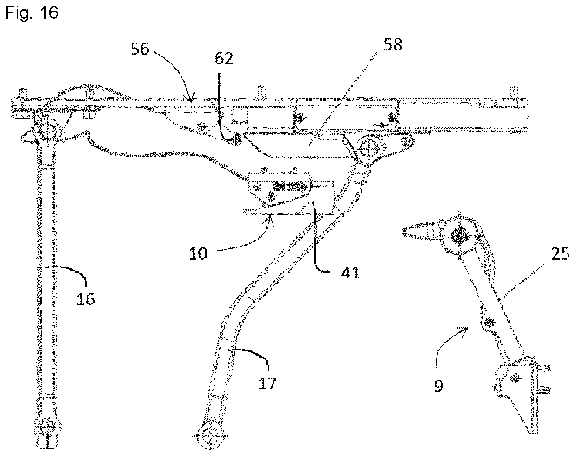

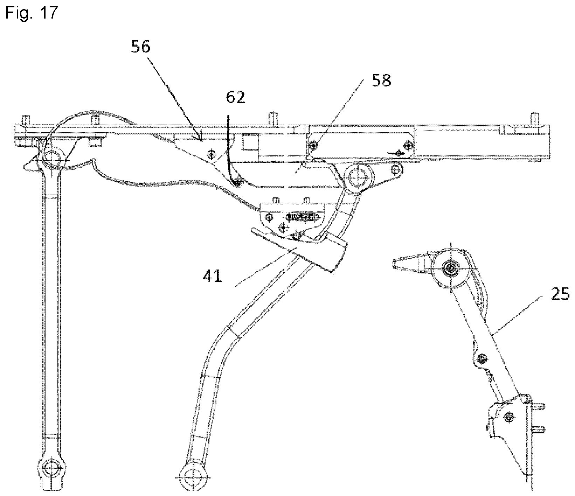

Les figures 16 et 17 illustrent la deuxième phase de déplacement de la porte. Le deuxième moyen d'actionnement 15 est configuré de sorte que la deuxième partie mobile passe de sa position rétractée à sa position déployée au cours de la deuxième phase de déplacement de la porte. Lors de cette deuxième phase de déplacement la première partie fixe demeure immobile en position déployée.

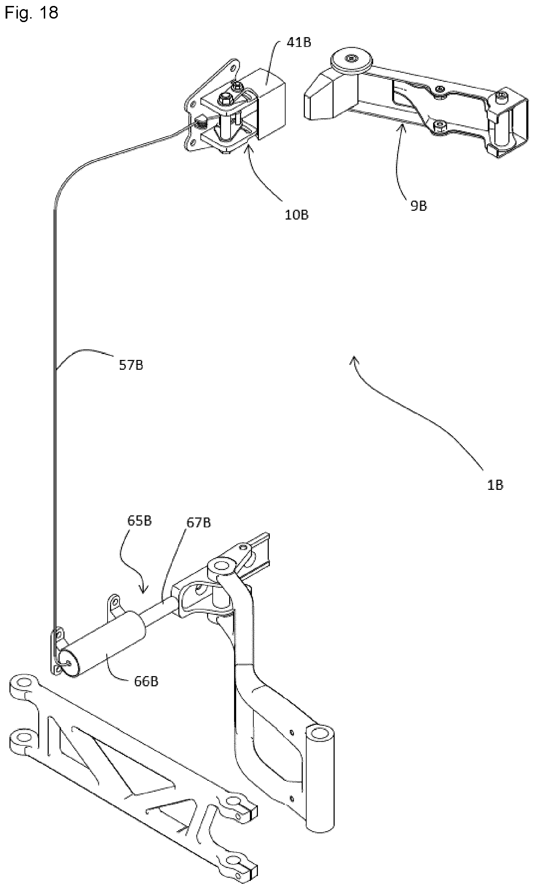

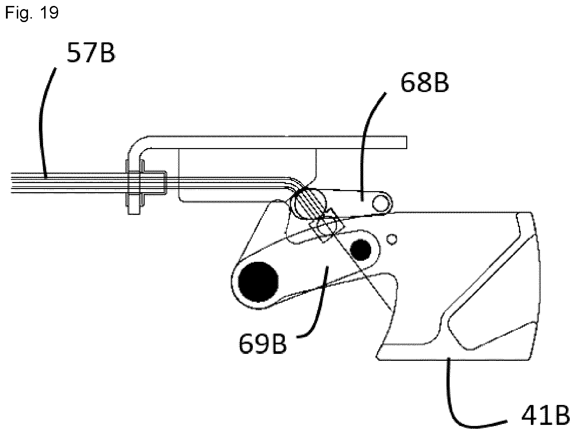

Les figures 18 et 19 illustrent une variante de réalisation d'un système de porte coulissante 1B selon l'invention. Cette variante de réalisation est décrite en utilisant les mêmes références que précédemment et en y ajoutant le suffixe "B". Seules les différences principales par rapport au premier mode de réalisation sont décrites. Selon cette variante de réalisation, le premier mécanisme 9B peut être globalement inchangé. Le deuxième mécanisme 10B est configuré de manière à ce que le déploiement de la deuxième partie mobile 41B soit obtenu par une poussée du câble 57B et non une traction du câble. Avantageusement, le câble 57B peut être maintenu dans une gaine de manière à permettre la transmission d'un effort de poussée. Le troisième mécanisme 56B est remplacé par un vérin 65B. Le vérin 65B comprend un corps 66B solidaire de la porte et un piston 67B mobile en translation relativement au corps. Le piston 67B est fixé à une première extrémité du câble 57B. Le piston 67B est configuré pour être déplacé au sein du corps 66B lorsque la porte passe de sa position fermée à sa position ouverte de sorte à exercer une tension sur la première extrémité du câble, notamment de sorte à pousser la première extrémité du câble.

En référence à la figure 19, l'autre extrémité du câble 57B est fixée à un premier élément 68B monté rotatif au sein du deuxième mécanisme 10B. Le premier élément 68B est apte à transmettre un effort de poussée du câble 57B à un deuxième élément 69B en forme de V, fixé à la deuxième partie mobile 41B, de manière à déployer la deuxième partie mobile 41B. Le premier élément 68B est aussi apte à transmettre un effort de traction du câble 57B au deuxième élément 69B de manière à rétracter la deuxième partie mobile 41B.

Grâce à l'invention, on dispose d'un système de porte coulissante sans rail extérieur central, ce qui préserve l'aspect esthétique extérieur du véhicule. La porte 4 reste néanmoins bien maintenue à la caisse lorsqu'elle est en position ouverte et ne risque pas de s'affaisser ou d'être arrachée lors de l'utilisation du véhicule avec la porte ouverte. Par exemple lors d'une opération de déchargement du véhicule, si un effort orienté transversalement et vers l'extérieur du véhicule est appliqué sur la porte, cet effort est supporté par le dispositif de maintien 8 et la porte n'est pas arrachée. L'absence de maintien lors du mouvement d'ouverture ou de fermeture de la porte n'est pas gênant car le risque qu'un effort transversal soit appliqué sur la porte durant ce mouvement est très faible.

## Revendications

1. Système de porte coulissante (1, 1B) pour un véhicule (V) automobile comprenant un élément de caisse (2), une porte (4) coulissante entre une position ouverte et une position fermée par rapport à l'élément de caisse, et un dispositif de maintien (8) de la porte lorsqu'elle est en position ouverte,
le dispositif de maintien comprenant :
- un premier mécanisme (9) comprenant une première partie fixe (24) et une première partie mobile (25), la première partie fixe étant fixée à l'élément de caisse et la première partie mobile étant articulée par rapport à la première partie fixe entre une position rétractée contre l'élément de caisse et une position déployée, la première partie mobile comprenant une première surface d'emboîtement (28),
- un premier moyen d'actionnement (14) du premier mécanisme (9) configuré de sorte que la première partie mobile (25) est en position rétractée lorsque la porte est en position fermée, et de sorte que la première partie mobile est en position déployée lorsque la porte est en position ouverte,
- un deuxième mécanisme (10) comprenant une deuxième partie fixe (40) et une deuxième partie mobile (41), la deuxième partie fixe étant fixée à la porte et la deuxième partie mobile étant articulée par rapport à la deuxième partie fixe entre une position rétractée contre la porte et une position déployée, la deuxième partie mobile comprenant une deuxième surface d'emboîtement (44),
- un deuxième moyen d'actionnement (15) du deuxième mécanisme (10) configuré de sorte que la deuxième partie mobile (41) est en position rétractée lorsque la porte est en position fermée, et de sorte que la deuxième partie mobile est en position déployée lorsque la porte est en position ouverte,
la première surface d'emboîtement (28) coopérant avec la deuxième surface d'emboîtement (44) lorsque la porte est en position ouverte pour maintenir la porte.

2. Système de porte coulissante (1, 1B) selon la revendication précédentes, **caractérisé en ce que** :
- la première partie mobile (25) est articulée en rotation autour de la première partie fixe (24) selon un axe de rotation (Z5) s'entendant sensiblement verticalement, et/ou **en ce que** :
- la deuxième partie mobile (41) est articulée en rotation autour de la deuxième partie fixe (40) selon un axe de rotation (Z7) s'entendant sensiblement verticalement.

3. Système de porte coulissante (1, 1B) selon l'une des revendications précédentes, **caractérisé en ce que** le premier mécanisme (9) comprend un premier moyen de rappel (29) tendant à faire passer la première partie mobile de sa position rétractée à sa position déployée, et **en ce que** la première partie mobile comprend un moyen d'appui contre la porte, notamment un galet (30), le déplacement de la porte de sa position ouverte à sa position fermée exerçant un appui sur ledit moyen d'appui tendant à faire passer la première partie mobile de sa position déployée à sa position rétractée.

4. Système de porte coulissante (1, 1B) selon l'une des revendications précédentes, **caractérisé en ce que** le premier mécanisme (9) comprend un moyen de blocage automatique (32) de la première partie mobile en position déployée, et un moyen de déblocage de la première partie mobile, le moyen de déblocage comprenant levier (34) configuré pour désactiver le moyen de blocage automatique, la porte comprenant une surface d'appui (38) configurée pour actionner ledit levier lorsque la porte passe de sa position ouverte à sa position fermée.

5. Système de porte coulissante (1, 1B) selon l'une des revendications précédentes, **caractérisé en ce qu'**il comprend en outre un dispositif de guidage (7) de la porte entre sa position fermée et sa position ouverte, le dispositif de guidage comprenant un troisième mécanisme (56, 56B) configuré pour être actionné par un déplacement de la porte entre sa position fermée et sa position ouverte, le troisième mécanisme étant relié par un câble (57, 57B) à la deuxième partie mobile (41, 41B), le troisième mécanisme étant configuré de sorte qu'un déplacement de la porte de sa position fermée à sa position ouverte entraîne une variation de la tension dudit câble, le deuxième mécanisme (10, 10B) étant configuré de sorte que la variation de tension du câble fasse passer la deuxième partie mobile de sa position rétractée à sa position déployée.

6. Système de porte coulissante (1, 1B) selon la revendication précédente, **caractérisé en ce que** le troisième mécanisme comprend:
- une navette (58) en liaison glissière avec la porte (4) et un support d'enroulement du câble (61) fixé selon une liaison pivot à la porte, le support d'enroulement du câble étant fixé à une première extrémité du câble (57), la navette étant configurée de sorte à entraîner en rotation le support d'enroulement du câble lorsque la porte passe de sa position fermée à sa position ouverte de sorte à exercer une tension sur la première extrémité du câble, ou
- un vérin (65B) comprenant un corps (66B) solidaire de la porte et un piston (67B) mobile relativement au corps, le piston étant fixé à une première extrémité du câble (57B), le piston étant configuré pour être déplacé au sein du corps lorsque la porte passe de sa position fermée à sa position ouverte de sorte à exercer une pression sur la première extrémité du câble.

7. Système de porte coulissante (1, 1B) selon l'une des revendications 5 ou 6, **caractérisé en ce que** l'élément de caisse (2) comprend une embrasure (3) dans laquelle la porte (4) prend place lorsqu'elle est en position fermée, le premier mécanisme (9) étant positionné à l'arrière de l'embrasure sensiblement à mi-hauteur de l'embrasure, le deuxième mécanisme (10) étant positionné contre une face intérieure de la porte et à même hauteur que le premier mécanisme, le dispositif de guidage (7) étant positionné au niveau d'un bord inférieur de la porte.

8. Système de porte coulissante (1, 1B) selon l'une des revendications précédentes, **caractérisé en ce que** l'élément de caisse (2) comprend une embrasure (3) dans laquelle la porte (4) prend place lorsqu'elle est en position fermée, et **en ce que** le deuxième moyen d'actionnement (15) est configuré de sorte que la deuxième partie mobile (41) se déplace de sa position rétractée à sa position déployée seulement après que le deuxième mécanisme ait franchit ladite embrasure lorsque la porte se déplace de sa position fermée à sa position ouverte.

9. Système de porte coulissante (1, 1B) selon l'une des revendications précédentes, **caractérisé en ce que** la porte est mobile de sa position fermée à sa position ouverte selon un mouvement comprenant une première phase suivi d'une deuxième phase, la première phase du mouvement comprenant un déplacement transversal de la porte (4) relativement à l'élément de caisse (2), et la deuxième phase du mouvement comprenant une translation longitudinale de la porte relativement à l'élément de caisse,
le premier moyen d'actionnement (14) étant configuré de sorte que la première partie mobile (25) passe de sa position rétractée à sa position déployée au cours de la première phase de déplacement de la porte, et/ou
le deuxième moyen d'actionnement (15) étant configuré de sorte que la deuxième partie mobile (41) passe de sa position rétractée à sa position déployée au cours de la deuxième phase de déplacement de la porte.

10. Système de porte coulissante (1, 1B) selon l'une des revendications précédentes, **caractérisé en ce que** la première surface d'emboîtement (28) et la deuxième surface d'emboîtement (44) forment respectivement une partie mâle et une partie femelle emboîtée l'une dans l'autre lorsque la porte est en position ouverte.

11. Véhicule (V) automobile, **caractérisé en ce qu'**il comprend un système de porte coulissante (1, 1B) selon l'une des revendications précédentes.

## Patentansprüche

1. Schiebetürsystem (1, 1B) für ein Kraftfahrzeug (V), umfassend ein Karosserieelement (2), eine Tür (4), die in Bezug auf das Karosserieelement zwischen einer geöffneten Stellung und einer geschlossenen Stellung verschiebbar ist, und eine Haltevorrichtung (8) zum Halten der Tür, wenn sie in der geöffneten Stellung ist, wobei die Haltevorrichtung umfasst:
- einen ersten Mechanismus (9), der einen ersten ortsfesten Teil (24) und einen ersten beweglichen Teil (25) umfasst, wobei der erste ortsfeste Teil an dem Karosserieelement befestigt ist und wobei der erste bewegliche Teil in Bezug auf den ersten ortsfesten Teil zwischen einer gegen das Karosserieelement eingezogenen Stellung und einer ausgefahrenen Stellung angelenkt ist, wobei der erste bewegliche Teil eine erste Eingriffsfläche (28) umfasst,
- eine erste Betätigungseinrichtung (14) zum Betätigen des ersten Mechanismus (25), die so ausgebildet ist, dass der erste bewegliche Teil (9) in eingezogener Stellung ist, wenn die Tür in geschlossener Stellung ist, und so, dass der erste bewegliche Teil in ausgefahrener Stellung ist, wenn die Tür in geöffneter Stellung ist,
- einen zweiten Mechanismus (10), der einen zweiten ortsfesten Teil (40) und einen zweiten beweglichen Teil (41) umfasst, wobei der zweite ortsfeste Teil an der Tür befestigt ist und wobei der zweite bewegliche Teil in Bezug auf den zweiten ortsfesten Teil zwischen einer gegen die Tür eingezogenen Stellung und einer ausgefahrenen Stellung angelenkt ist, wobei der zweite bewegliche Teil eine zweite Eingriffsfläche (44) umfasst,
- eine zweite Betätigungseinrichtung (15) zum Betätigen des zweiten Mechanismus (10), die so ausgebildet ist, dass der zweite bewegliche Teil (41) in eingezogener Stellung ist, wenn die Tür in geschlossener Stellung ist, und so, dass der zweite bewegliche Teil in ausgefahrener Stellung ist, wenn die Tür in geöffneter Stellung ist,
wobei die erste Eingriffsfläche (28) mit der zweiten Eingriffsfläche (44) zusammenwirkt, wenn die Tür in geöffneter Stellung ist, um die Tür zu halten.

2. Schiebetürsystem (1, 1B) nach dem vorhergehenden Anspruch, **dadurch gekennzeichnet, dass**:
- der erste bewegliche Teil (25) um den ersten ortsfesten Teil (24) entlang einer Drehachse (Z5), die sich im Wesentlichen vertikal erstreckt, drehbar angelenkt ist, und/oder dadurch, dass:
- der zweite bewegliche Teil (41) um den zweiten ortsfesten Teil (40) entlang einer Drehachse (Z7), die sich im Wesentlichen vertikal erstreckt, drehbar angelenkt ist.

3. Schiebetürsystem (1, 1B) nach einem der vorhergehenden Ansprüche, **dadurch gekennzeichnet, dass** der erste Mechanismus (9) eine erste Rückstelleinrichtung (29) umfasst, die dazu tendiert, den ersten beweglichen Teil aus seiner eingezogenen Stellung in seine ausgefahrene Stellung übergehen zu lassen, und dadurch, dass der erste bewegliche Teil eine Abstützeinrichtung zum Abstützen gegen die Tür, insbesondere eine Rolle (30), umfasst, wobei die Verlagerung der Tür von ihrer geöffneten Stellung zu ihrer geschlossenen Stellung eine Abstützung auf der Abstützeinrichtung ausübt, die dazu tendiert, den ersten beweglichen Teil aus seiner ausgefahrenen Stellung in seine eingezogene Stellung übergehen zu lassen.

4. Schiebetürsystem (1, 1B) nach einem der vorhergehenden Ansprüche, **dadurch gekennzeichnet, dass** der erste Mechanismus (9) eine Einrichtung (32) zum automatischen Verriegeln des ersten beweglichen Teils in ausgefahrener Stellung und eine Einrichtung zum Entriegeln des ersten beweglichen Teils umfasst, wobei die Einrichtung zum Entriegeln einen Hebel (34) umfasst, der dazu ausgebildet ist, die Einrichtung zum automatischen Verriegeln zu deaktivieren, wobei die Tür eine Abstützfläche (38) umfasst, die dazu ausgebildet ist, den Hebel zu betätigen, wenn die Tür aus ihrer geöffneten Stellung in ihre geschlossene Stellung übergeht.

5. Schiebetürsystem (1, 1B) nach einem der vorhergehenden Ansprüche, **dadurch gekennzeichnet, dass** es ferner eine Führungsvorrichtung (7) zum Führen der Tür zwischen ihrer geschlossenen Stellung und ihrer offenen Stellung umfasst, wobei die Führungsvorrichtung einen dritten Mechanismus (56, 56B) umfasst, der dazu ausgebildet ist, durch eine Verlagerung der Tür zwischen ihrer geschlossenen Stellung und ihrer geöffneten Stellung betätigt zu werden, wobei der dritte Mechanismus durch einen Seilzug (57, 57B) mit dem zweiten beweglichen Teil (41, 41B) verbunden ist, wobei der dritte Mechanismus so ausgebildet ist, dass eine Verlagerung der Tür aus ihrer geschlossenen Stellung in ihre geöffnete Stellung eine Änderung der Spannung des Seilzugs bewirkt, wobei der zweite Mechanismus (10, 10B) so ausgebildet ist, dass die Änderung der Spannung des Seilzugs dazu führt, den zweiten beweglichen Teil aus seiner eingezogenen Stellung in seine ausgefahrene Position übergehen zu lassen.

6. Schiebetürsystem (1, 1B) nach dem vorhergehenden Anspruch, **dadurch gekennzeichnet, dass** der dritte Mechanismus umfasst:
- ein Schiffchen (58) in Gleitverbindung mit der Tür (4) und eine Seilzugaufrollhalterung (61), die gemäß einer Schwenkverbindung an der Tür befestigt ist, wobei die Seilzugaufrollhalterung an einem ersten Ende des Seilzugs (57) befestigt ist, wobei das Schiffchen so ausgebildet ist, dass es die Seilzugaufrollhalterung drehantreibt, wenn die Tür aus ihrer geschlossenen Stellung in ihre geöffnete Stellung übergeht, so dass eine Spannung auf das erste Ende des Seilzugs ausgeübt wird, oder
- einen Zylinder (65B), umfassend einen mit der Tür fest verbundenen Körper (66B) und einen relativ zu dem Körper beweglichen Kolben (67B), wobei der Kolben an einem ersten Ende des Seilzugs (57B) befestigt ist, wobei der Kolben dazu ausgebildet ist, innerhalb des Körpers verlagert zu werden, wenn die Tür aus ihrer geschlossenen Stellung in ihre geöffnete Stellung übergeht, so dass ein Druck auf das erste Ende des Seilzugs ausgeübt wird.

7. Schiebetürsystem (1, 1B) nach einem der Ansprüche 5 oder 6, **dadurch gekennzeichnet, dass** das Karosserieelement (2) eine Laibung (3) umfasst, in der die Tür (4) Platz nimmt, wenn sie in geschlossener Stellung ist, wobei der erste Mechanismus (9) auf der Rückseite der Laibung im Wesentlichen auf halber Höhe der Laibung positioniert ist, wobei der zweite Mechanismus (10) an einer Innenseite der Tür und auf der gleichen Höhe wie der erste Mechanismus positioniert ist, wobei die Führungsvorrichtung (7) an einer Unterkante der Tür positioniert ist.

8. Schiebetürsystem (1, 1B) nach einem der vorhergehenden Ansprüche, **dadurch gekennzeichnet, dass** das Karosserieelement (2) eine Laibung (3) umfasst, in der die Tür (4) Platz nimmt, wenn sie in geschlossener Stellung ist, und dadurch, dass die zweite Betätigungseinrichtung (15) so ausgebildet ist, dass der zweite bewegliche Teil (41) sich erst aus seiner eingezogenen Stellung in seine ausgefahrene Stellung verlagert, nachdem der zweite Mechanismus die Laibung überquert hat, wenn sich die Tür aus ihrer geschlossenen Stellung in ihre geöffnete Stellung verlagert.

9. Schiebetürsystem (1, 1B) nach einem der vorhergehenden Ansprüche, **dadurch gekennzeichnet, dass** die Tür aus ihrer geschlossenen Stellung in ihre geöffnete Stellung mit einer Bewegung beweglich ist, die eine erste Phase umfasst, auf die eine zweite Phase folgt, wobei die erste Phase der Bewegung eine Querverlagerung der Tür (4) relativ zu dem Karosserieelement (2) umfasst und wobei die zweite Phase der Bewegung eine Längstranslation der Tür relativ zu dem Karosserieelement umfasst,
wobei die erste Betätigungseinrichtung (14) so ausgebildet ist, dass der erste bewegliche Teil (25) während der ersten Verlagerungsphase der Tür aus seiner eingezogenen Stellung in seine ausgefahrene Stellung übergeht, und/oder
wobei die zweite Betätigungseinrichtung (15) so ausgebildet ist, dass der zweite bewegliche Teil (41) während der zweiten Verlagerungsphase der Tür aus seiner eingezogenen Stellung in seine ausgefahrene Stellung übergeht.

10. Schiebetürsystem (1, 1B) nach einem der vorhergehenden Ansprüche, **dadurch gekennzeichnet, dass** die erste Eingriffsfläche (28) und die zweite Eingriffsfläche (44) einen männlichen Teil bzw. einen weiblichen Teil bilden, die ineinander eingreifen, wenn die Tür in geöffneter Stellung ist.

11. Kraftfahrzeug (V), **dadurch gekennzeichnet, dass** es ein Schiebetürsystem (1, 1B) nach einem der vorhergehenden Ansprüche umfasst.

## Claims

1. Sliding door system (1, 1B) for a motor vehicle (V), comprising a body element (2), a door (4) sliding between an open position and a closed position with respect to the body element, and a device (8) for holding the door when it is in the open position,
the holding device comprising:
- a first mechanism (9) comprising a first fixed part (24) and a first mobile part (25), the first fixed part being fastened to the body element and the first mobile part being articulated with respect to the first fixed part between a position in which it is retracted against the body element and a deployed position, the first mobile part comprising a first interlocking surface (28),
- a first actuation means (14) of the first mechanism (9), configured such that the first mobile part (25) is in the retracted position when the door is in the closed position, and such that the first mobile part is in the deployed position when the door is in the open position,
- a second mechanism (10) comprising a second fixed part (40) and a second mobile part (41), the second fixed part being fastened to the door and the second mobile part being articulated with respect to the second fixed part between a position in which it is retracted against the door and a deployed position, the second mobile part comprising a second interlocking surface (44),
- a second actuation means (15) of the second mechanism (10), configured such that the second mobile part (41) is in the retracted position when the door is in the closed position, and such that the second mobile part is in the deployed position when the door is in the open position,
the first interlocking surface (28) cooperating with the second interlocking surface (44) when the door is in the open position, to hold the door.

2. Sliding door system (1, 1B) according to the preceding claim, **characterized in that**:
- the first mobile part (25) is articulated in rotation around the first fixed part (24) about an axis of rotation (Z5) extending substantially vertically, and/or **in that**:
- the second mobile part (41) is articulated in rotation around the second fixed part (40) about an axis of rotation (Z7) extending substantially vertically.

3. Sliding door system (1, 1B) according to one of the preceding claims, **characterized in that** the first mechanism (9) comprises a first return means (29) tending to make the first mobile part pass from its retracted position to its deployed position, and **in that** the first mobile part comprises a means for bearing against the door, in particular a roller (30), the displacement of the door from its open position to its closed position exerting a bearing force on said bearing means tending to make the first mobile part pass from its deployed position to its retracted position.

4. Sliding door system (1, 1B) according to one of the preceding claims, **characterized in that** the first mechanism (9) comprises a means (32) for automatically blocking the first mobile part in the deployed position, and a means for unblocking the first mobile part, the unblocking means comprising a lever (34) configured to deactivate the automatic blocking means, the door comprising a bearing surface (38) configured to actuate said lever when the door passes from its open position to its closed position.

5. Sliding door system (1, 1B) according to one of the preceding claims, **characterized in that** it further comprises a device (7) for guiding the door between its closed position and its open position, the guiding device comprising a third mechanism (56, 56B) configured to be actuated by a displacement of the door between its closed position and its open position, the third mechanism being connected by a cable (57, 57B) to the second mobile part (41, 41B), the third mechanism being configured such that a displacement of the door from its closed position to its open position brings about a variation in the tension of said cable, the second mechanism (10, 10B) being configured such that the variation in tension of the cable makes the second mobile part pass from its retracted position to its deployed position.

6. Sliding door system (1, 1B) according to the preceding claim, **characterized in that** the third mechanism comprises:
- a shuttle (58) in sliding connection with the door (4) and a cable winding support (61) fastened with a pivot connection to the door, the cable winding support being fastened to a first end of the cable (57), the shuttle being configured so as to drive the cable winding support in rotation when the door passes from its closed position to its open position so as to exert tension on the first end of the cable, or
- a ram (65B) comprising a body (66B) as one with the door and a piston (67B) that is able to move relative to the body, the piston being fastened to a first end of the cable (57B), the piston being configured to be moved within the body when the door passes from its closed position to its open position so as to exert pression on the first end of the cable.

7. Sliding door system (1, 1B) according to either of Claims 5 and 6, **characterized in that** the body element (2) comprises an aperture (3) in which the door (4) is placed when it is in the closed position, the first mechanism (9) being positioned at the rear of the aperture substantially halfway up the aperture, the second mechanism (10) being positioned against an inner face of the door and at the same height as the first mechanism, the guiding device (7) being positioned at a lower edge of the door.

8. Sliding door system (1, 1B) according to one of the preceding claims, **characterized in that** the body element (2) comprises an aperture (3) in which the door (4) is placed when it is in the closed position, and **in that** the second actuation means (15) is configured such that the second mobile part (41) moves from its retracted position to its deployed position only after the second mechanism has cleared said aperture when the door moves from its closed position to its open position.

9. Sliding door system (1, 1B) according to one of the preceding claims, **characterized in that** the door is able to move from its closed position to its open position with a movement comprising a first phase followed by a second phase, the first phase of the movement comprising a transverse displacement of the door (4) relative to the body element (2), and the second phase of the movement comprising a longitudinal translation of the door relative to the body element,
the first actuation means (14) being configured such that the first mobile part (25) passes from its retracted position to its deployed position during the first phase of displacement of the door, and/or
the second actuation means (15) being configured such that the second mobile part (41) passes from its retracted position to its deployed position during the second phase of displacement of the door.

10. Sliding door system (1, 1B) according to one of the preceding claims, **characterized in that** the first interlocking surface (28) and the second interlocking surface (44) respectively form a male part and a female part that are interlocked one in the other when the door is in the open position.

11. Motor vehicle (V), **characterized in that** it comprises a sliding door system (1, 1B) according to one of the preceding claims.
